# EUROPÄISCHE PATENTSCHRIFT

(11) **EP 2 424 771 B1**
(45) Veröffentlichungstag und Bekanntmachung des Hinweises auf die Patenterteilung: **19.06.2013**
(21) Anmeldenummer: 10715719.0
(22) Anmeldetag: 23.04.2010
(51) Int. Cl.: B62D 55/265, B62D 57/024

(54) **ANLAGE ZUR MONTAGE VON KAROSSERIETEILEN**
INSTALLATION FOR MOUNTING BODY PARTS
INSTALLATION DE MONTAGE DE PIECES DE CARROSSERIE

(30) Priorität: 02.05.2009 DE 102009019965
(43) Veröffentlichungstag der Anmeldung: 07.03.2012
(73) Patentinhaber: ThyssenKrupp System Engineering GmbH, 74076 Heilbronn (DE)
(72) Erfinder: STEIN, Hans, 09337 Hohenstein-Ernstthal (DE); SCHULZE, Jens, 09217 Burgstädt (DE); GEBAUER, Wolfgang, 08066 Zwickau (DE)
(74) Vertreter: Kirchner, Sven
(86) Internationale Anmeldenummer: PCT/EP2010/002527
(87) Internationale Veröffentlichungsnummer: WO 2010/127778

(56) Entgegenhaltungen:
- EP-A2- 0 296 369
- DE-A1- 19 917 908
- US-A1- 2009 067 962

## Beschreibung

Die Erfindung betrifft eine Anlage zur Montage von Fahrzeugkarosserieteilen gemäß dem Oberbegriff der unabhängigen Patentansprüche.

Aus dem Stand der Technik sind Anlagen bekannt, die entlang einer Förderlinie eine oder mehrere zentrale stationäre Bearbeitungsstationen (z.B. (Geometrie-)Schweißstationen) aufweisen, denen entlang der Förderlinie über einen Karosserieförderer ein zentrales Karosserieteil in Form eines Karosseriegerüsts zugeführt wird und denen abseits der Förderlinie, von der Seite, in Spannrahmen gehaltene weitere Karosserieteile (wie Karosserieseitenwände) zugeführt werden. Dabei werden die Spannrahmen abseits der Bearbeitungsstation in so genannten Beladungs- oder Bestückungsstationen mit entsprechenden Karosserieteilen bestückt und die bestückten Spannrahmen der Bearbeitungsstation über Transportsysteme in Form von bodenseitig oder hängend ausgeführten Spannrahrnenzuführsystemen der Bearbeitungsstation zugeführt. Im Bereich der Bearbeitungsstation werden die Karosserieteile über Zuführ- und Positioniereinrichtungen dem Spannrahmen entnommen und dem in der zentralen Bearbeitungsstation positionierten zentralen Karosserieteil zugeführt. Sobald die Karosserieteile korrekt gegeneinander ausgerichtet sind kann das zugeführte Karosserieteil mit dem zentralen Karosserieteil über Schweißroboter verbunden (gefügt) werden.

Aus der DE 199 17 908 A1 ist eine Anlage für den flexiblen Zusammenbau von Kraftfahrzeugkarosserien bekannt, bei der ein Spannrahmen über zwei Laufwagen (wobei zumindest ein Laufwagen einen eigenen Antrieb aufweist) in einer hängenden und abschnittsweise bogenförmig ausgebildeten Ringbahn zwischen einer Beladungsstation - in der die Spannrahmen bestückt werden - und einer Bearbeitungsstation - in der das von dem jeweiligen Spannrahmen getragene Werkstück der Bearbeitungsstation zugeführt und an diese übergeben wird, um dort mit dem zentralen Karosserieteil gefügt zu werden - verfahren wird.

Ferner ist aus der EP 0 583 282 B1 eine Anlage für Fahrzeugkarosserien bekannt, bei der eine Transportvorrichtung vorgesehen ist, welche bestückte Spannrahmen in einer Ebene parallel zu einer Transfer- bzw. Förderlinie zwischen einem Spannrahmenmagazin und einer quer dazu anordenbaren Zustellvorrichtung hin und her bewegt. Dabei ist das Spannrahmenmagazin um eine horizontale oder eine vertikale Achse in Form eines rotierbaren Trommelgestells ausgebildet, welches in einer Ruhestellung jeweils einen Spannrahmen in einer parallel zur Transferlinie sich erstreckenden Ebene hält. Ausgehend von dieser Ruhestellung wird der - parallel zur Transferlinie und senkrecht zum Boden auf dem die Anlage steht - vorgehaltene Spannrahmen über eine Transportvorrichtung parallel zur Transferlinie der Arbeits- bzw. Bearbeitungsstation zugeführt. Die Transportvorrichtung umfasst Schleppeinrichtungen für die Bewegung der Spannrahmen entlang von (unteren (bodenseitigen) und oberen) Führungen.

In der EP 0 296 369 B1 ist eine Vorrichtung zum automatischen Fördern von Spannrahmen zwischen einer Wartestation und einer Arbeitsstation beschrieben, bei welcher die Spannrahmen in parallel zu einer Transferlinie für das zu bearbeitende Werkstück angeordneten Führungen verschiebbar und im Bereich der Arbeitsstation in quer zur Transferlinie verlaufenden Schienen aus der Verschiebestellung in eine Arbeitsstellung bewegbar sind.

Der Erfindung liegt die Aufgabe zugrunde, eine Anlage zur Montage von Fahrzeugkarosserien bereitzustellen, bei der die Mittel für den Transport von mit Fahrzeugteilen bestückbaren Spannrahmen zu einer zentralen Arbeits- oder Bearbeitungsstation auf andere Weise als im vorstehend beschriebenen Stand der Technik realisiert und in besonders platzsparender Bauweise ausgeführt sind. An der Bearbeitungsstation der Anlage sollen dabei unterschiedliche Spannrahmen (z.B. verschiedene Spannrahmen für unterschiedliche Fahrzeugtypen oder - derivate) bereitgestellt beziehungsweise eine einfache Bauteilzuführung gewährleistet werden, wobei ein möglichst flexibler Austausch der Spannrahmen beziehungsweise eine möglichst einfache Neubestückung der Spannrahmen gewährleistet werden soll.

Erfindungsgemäß wird diese Aufgabe durch die Gesamtheit der Merkmale des unabhängigen Patentanspruchs gelöst. Vorteilhafte Weiterbildungen der Erfindung sind Bestandteil der Unteransprüche.

Die erfindungsgemäße Anlage zur Montage einer Fahrzeugkarosserie umfasst neben einer zentralen Bearbeitungsstation eine Schienenführun über die separate Spannrahmen, die mit Karosserieteilen bestückbar sind, über Transportwagen der Bearbeitungsstation zuführbar sind. Gemäß der Erfindung umfasst die Schienenführung zumindest zwei winklig, insbesondere rechtwinklig zueinander angeordnete separate Schienenteile auf denen die Fahrwerke des Transportwagens bewegbar sind. Die beiden Schienenteile sind über Mittel zur Ausrichtung (bzw. Verdrehung) eines Fahrwerks miteinander verbunden, sodass ein in den Ausrichtungsmitteln aufgenommenes Fahrwerk, welches in einer Bewegungsrichtung in Verlaufsrichtung des einen Schienenteils in die Ausrichtungsmittel eingefahren worden ist, in eine Bewegungsrichtung in Verlaufsrichtung des anderen Schienenteils ausricht- bzw. verdrehbar ist. Hierfür sind die Ausrichtungsmittel - beispielsweise in Form einer über eine nichtdargestellte Steuereinrichtung steuerbaren Drehscheibe - ausgebildet, welche Aufnahmemittel zur zumindest bereichsweise formschlüssigen Aufnahme eines Fahrwerks aufweist, sodass bei Vorhandensein eines Fahrwerks in den Ausrichtungsmitteln über die Ausrichtungsmittel eine automatische Neuausrichtung des aufgenommenen Fahrwerks in Richtung des zumindest einen anderen Schienenteils möglich ist. Ein Fahrwerk besteht in einer möglichen einfachen Ausführungsform aus einem oder mehreren an einer Achskonstruktion geführten Rädern, welche mit der Schienenführung zusammenwirken.

In einer bevorzugten Ausführungsform der Erfindung ist ein Schienenteil im Wesentlichen gradlinig ausgebildet und im Wesentlichen parallel zu einer Förderlinie der Bearbeitungsstation angeordnet, während ein zweiter Führungsschienenteil, welcher über die Ausrichtungsmittel an den ersten Schienenteil angekuppelt ist, derart ausgebildet und angeordnet, dass ein Transportwagen der mit beiden Fahrwerken auf den ersten Schienenteil geradlinig bis in die Ausrichtungsmittel bewegt wird, nach Neuausrichtung des eingebrachten Fahrwerks auf den angekoppelten weiteren Schienenteil, derart verfahrbar ist, dass der Transportwagen ausgehend von der Position parallel zur Förderlinie in eine hierzu um ca. 90° versetzte Position überführbar ist. Dabei kann der zumindest eine weitere über die Ausrichtungsmittel angekoppelte Schienenteil entweder als gradliniger Schienenteil analog zum ersten Schienenteil ausgebildet sein, oder alternativ hierzu kann der weitere Schienenteil bogenförmig in Form eines Viertelkreissegmentes ausgeführt sein.

Weitere Vorteile, Besonderheiten und zweckmäßige Weiterbildungen der Erfindung ergeben sich aus den Unteransprüchen und der nachfolgenden Zeichnungsdarstellung bevorzugter Ausführungsbeispiele.

Es zeigen:
- Fig. 1-3: eine erfindungsgemäße Anlage zur Montage einer Fahrzeugkarosserie in schematischer Darstellung mit unterschiedlichen Betriebspositionen des einen Spannrahmen tragenden Transportwagens,
- Fig. 4: eine weitere mögliche Ausführung der erfindungsgemäßen Anlage zur Montage einer Fahrzeugkarosserie unter Verwendung eines bogenförmigen zweiten Schienenteils,
- Fig. 5: eine Weiterbildung der erfindungsgemäßen Anlage durch Verbindung von insgesamt zumindest drei separaten Schienenteilen über ein einziges Ausrichtungsmittel zur Ausrichtung eines Fahrwerks und
- Fig. 6: eine Weiterbildung der erfindungsgemäßen Anlage mit einem im Wesentlichen U-förmig ausgebildeten Schienenführungssystem.

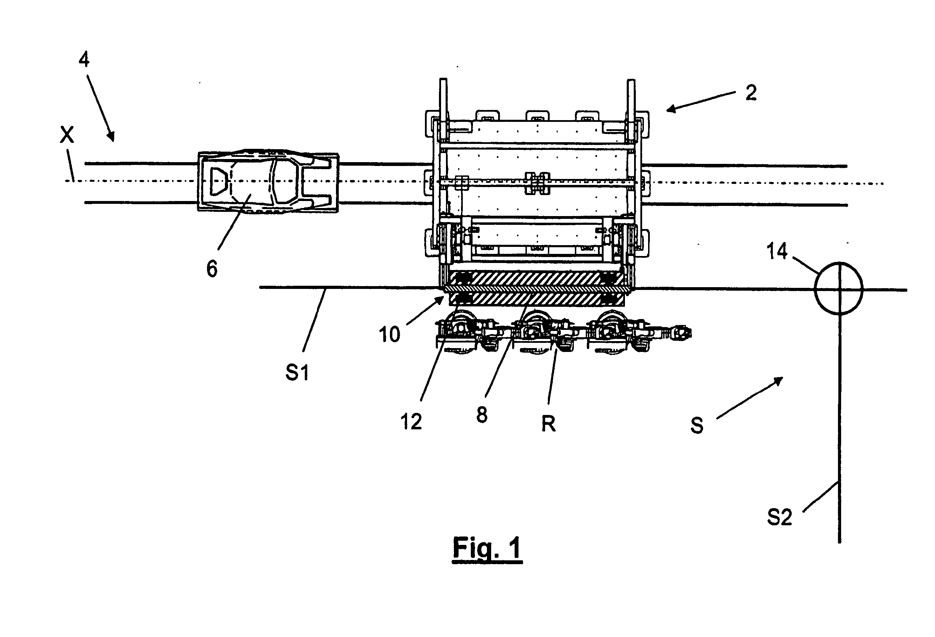

Fig. 1 zeigt die erfindungsgemäße Anlage zur Montage einer Fahrzeugkarosserie in einer ersten möglichen Ausführungsform. Die Anlage umfasst dabei eine zentrale Bearbeitungsstation 2 zur Montage und/oder Bearbeitung von Fahrzeugkarosserieteilen der über eine Karosseriefördereinrichtung 4 entlang einer Förderlinie X ein zu bearbeitendes bzw. ein zu montierendes zentrales Karosserieteil (z. B. in Form eines Karosseriegerüsts) 6 zuführbar ist, einen Transportwagen 10 zur Aufnahme eines mit einem oder mehreren Karosserieteilen bestückbaren Spannrahmens 8, wobei der Transportwagen 10 zumindest zwei voneinander beabstandete Fahrwerke 12 aufweist. Darüber hinaus umfasst die Anlage eine Schienenführung S mit zumindest zwei separaten Schienenteilen S1 und S2, wobei die beiden Schienenteile S1, S2 über Mittel 14 zur Ausrichtung eines Fahrwerks 12 miteinander verbunden sind.

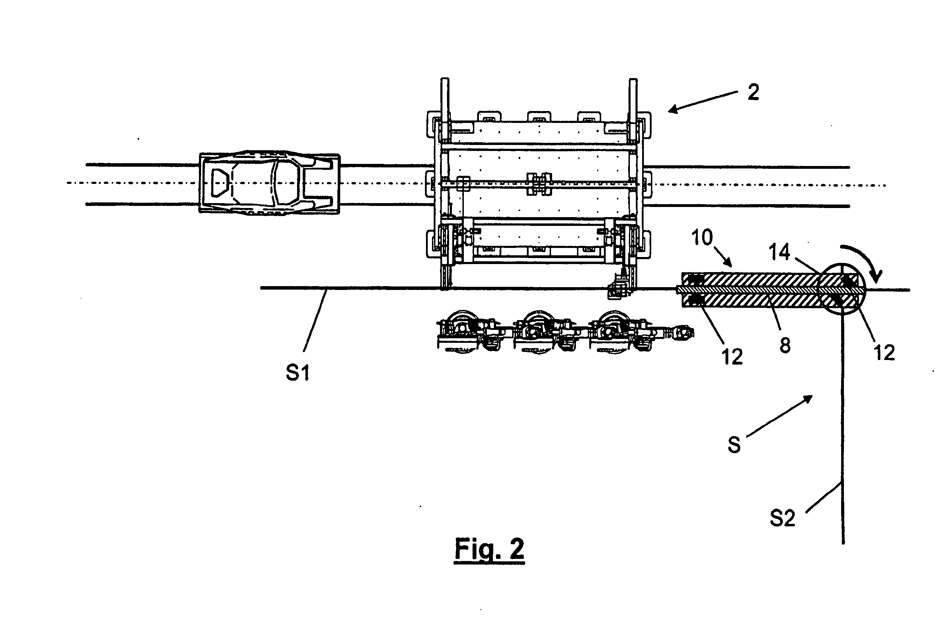

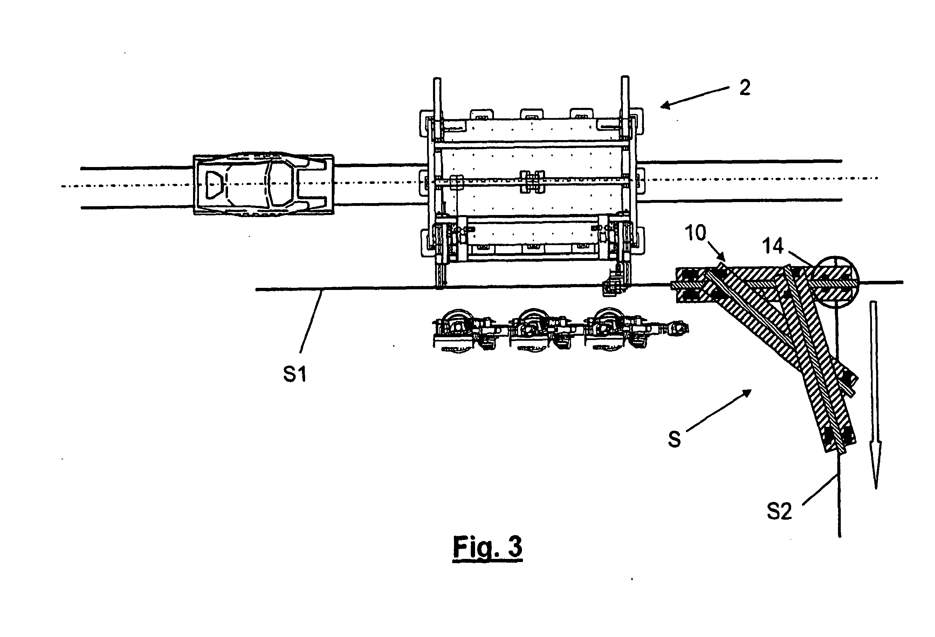

In der gemäß Fig. 1 dargestellten Anlage ist ein einen Spannrahmen 8 tragender Transportwagen 10 in einer Betriebs- bzw. Arbeitsposition dargestellt, in der ein vom Spannrahmen 8 getragenes Karosserieteil über nicht dargestellte Positionier- und Zuführmittel (wie sie aus dem Stand der Technik hinlänglich bekannt sind) an die Bearbeitungs- bzw. Arbeitsstation 2 übergeben wird, um mit einem in der Bearbeitungsstation 2 befindlichen zentralen Karosserieteil 6 gefügt zu werden. Zur Durchführung eines derartigen Fügeprozesses sind in schematischer Darstellung die drei Arbeits- bzw. Schweißroboter R dargestellt. Der nunmehr geleerte Spannrahmen 8 wird ausgehend von der in Fig. 1 dargestellten Arbeitsposition in eine Beladungsposition (Fig. 3) zum Wechseln des Spannrahmens 8 oder zur Neuaufnahme von Karosserieteilen überführt. Hierfür wird der Transportwagen 10 auf dem gradlinig ausgebildeten Schienenteil S1 der Schienenführung S aus dem Arbeitsbereich der Bearbeitungsstation 2 parallel zur Förderlinie X herausgefahren bis er mit seinem in Bewegungsrichtung gesehen vorderen Fahrwerk 12 im Ausrichtungsmittel 14 aufgenommen ist. Ausgehend von dieser in Fig. 2 dargestellten Position, wird das Fahrwerk 12 über die Ausrichtungsmittel 14 soweit verdreht bis das Fahrwerk 12 eine neue Bewegungsrichtung in Verlaufsrichtung des weiteren Schienenteils S2 aufweist. Nachdem das Fahrwerk 12 entsprechend ausgerichtet wurde, kann der Transportwagen 10 über einen eigenen Fahrwerksantrieb (beispielsweise in Form eines steuerbaren elektrischen Antriebsmotors) in Verlaufsrichtung des neuen Schienenteils S2 verfahren werden, bis die entsprechende gewünschte Beladeposition erreicht ist. Im Ausführungsbeispiel gemäß der Erfindung kann dies die in Fig. 3 dargestellte letzte Position des Transportwagens 10 sein, in der dieser mit seiner Längsachse um eine zur Förderlinie X im Wesentlichen um 90° versetzte Position ausgerichtet ist. Die Mittel 14 zur Ausrichtung eines Fahrwerkes 12 können beispielsweise in Form einer Drehscheibe ausgebildet sein, wobei die Drehscheibe einen ortsfesten Basisteil und einen drehbar auf dem ortsfesten Basisteil angeordneten Aufnahmeteil für ein Fahrwerk 12 eines Transportwagens 10 aufweist. Dabei ist das drehbar gelagerte Aufnahmeteil mit Vorteil durch einen automatisch (über eine nicht dargestellte Steuereinrichtung) steuerbaren Antrieb verdrehbar ausgeführt. Ferner weist das Aufnahmemittel Bereiche auf, in denen das Fahrwerk 12 zumindest bereichsweise formschlüssig aufgenommen werden kann. Des Weiteren ist eine Sensorik vorgesehen, über die festgestellt werden kann, ob sich in den Aufnahmemitteln ein Fahrwerk 12 in korrekter Position befindet. Wird über die vorhandene Sensorik festgestellt, das ein Fahrwerk 12 in die Aufnahmemittel der Ausrichtungsmittel 14 eingefahren ist, kann die Drehscheibe über eine nicht dargestellte Steuereinrichtung automatisiert verstellt werden.

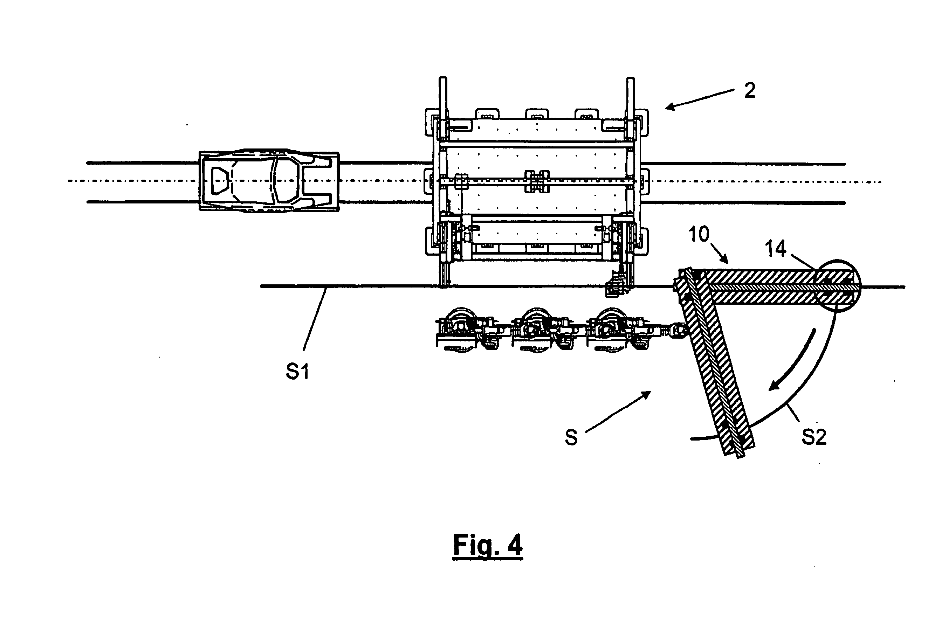

In Fig. 4 ist eine weitere mögliche Ausführung der erfindungsgemäßen Anlage dargestellt, bei der der an dem ersten parallel zur Förderlinie X verlaufenden Schienenteil S1 über die Ausrichtungsmittel 14 anzukoppelnde weitere Schienenteil S2 als bogenförmiger Schienenteil in Form eines Viertelkreissegmentes ausgeführt ist.

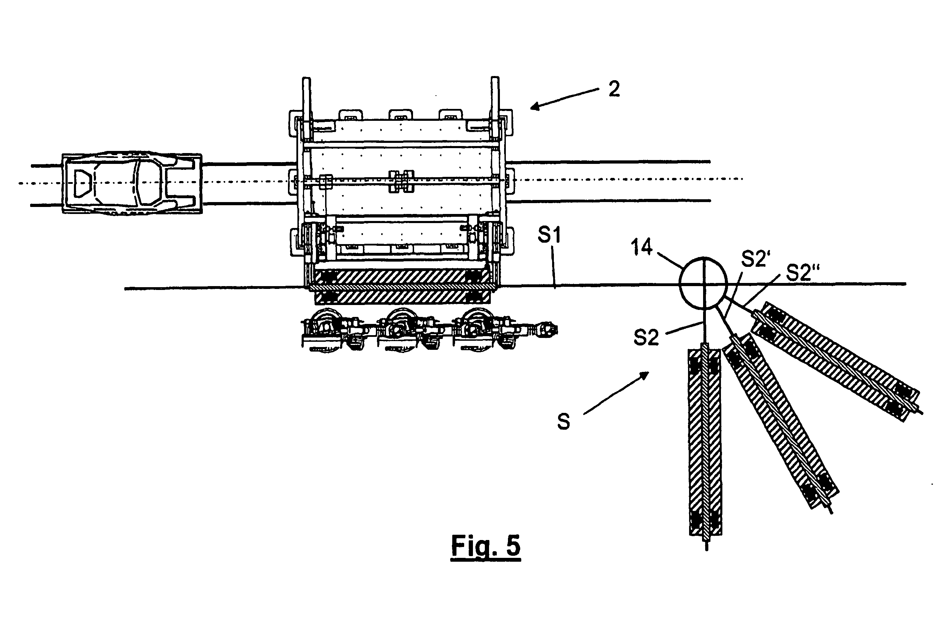

Gemäß Fig. 5 ist eine Ausführungsform der erfindungsgemäßen Anlage dargestellt, welche in einer Weiterbildung ein Ausrichtungsmittel 14 zeigt über welches an dem ersten Schienenteil S1 im dargestellten Ausführungsbeispiel insgesamt drei weitere Schienenteile S2, S2', S2" angekoppelt sind. Durch die Ankopplung weiterer Schienenteile S2', S2" können mehrere bereits vorbeladene Spannrahmen 8 vorgehalten werden, sodass die entsprechenden Durchlauf- bzw. Bearbeitungszeiten weiter verkürzt werden können.

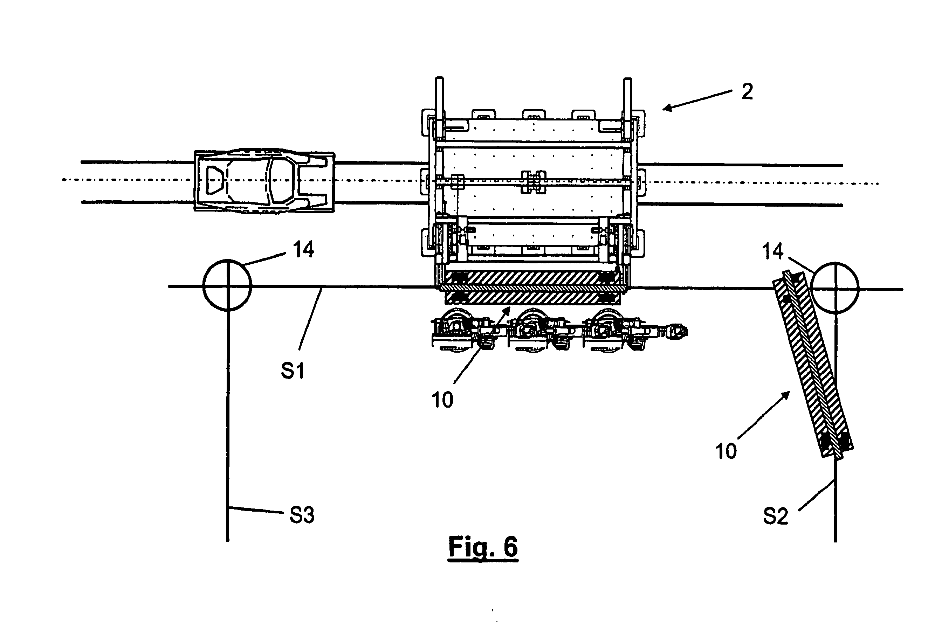

Schließlich ist in Fig. 6 ein Ausführungsbeispiel der Erfindung dargestellt, bei der die Schienenführung S im Wesentlichen U-förmig ausgebildet ist, wobei an das erste im Wesentlichen parallel zur Förderlinie X angeordnete und gradlinig ausgeführte Schienenteil S1 in Förderrichtung gesehen vor als auch hinter der Bearbeitungsstation 2 jeweils ein Ausrichtungsmittel 14 vorgesehen ist, über welches zumindest ein weiterer Schienenteil S2, S3 angekoppelt ist, sodass die Bearbeitungsstation 2 von unterschiedlichen Seiten im Wechsel lieferbar ist.

### Bezugszeichenliste:

| | |
|---|---|
| 2 | Bearbeitungsstation |
| 4 | Karosseriefördereinrichtung |
| X | Förderlinie |
| 6 | (zentrales) Karosserieteil (Karosseriegerüst) |
| 8 | Spannrahmen |
| 10 | Transportwagen |
| 12 | Fahrwerk |
| S | Schienenführung |
| S1, S2, S3 | erstes, zweites, drittes Schienenteil |
| 14 | Mittel zur Ausrichtung des Fahrwerks |
| R | Arbeits- bzw. Schweißroboter |

## Patentansprüche

1. Anlage zur Montage einer Fahrzeugkarosserie, umfassend
- eine Bearbeitungsstation (2) zur Montage und/oder Bearbeitung von Karosserieteilen, der über eine Karosseriefördereinrichtung (4) entlang einer Förderlinie (X) ein zu bearbeitendes/montierendes zentrales Karosserieteil (6) zuführbar ist,
- einen Spannrahmen (8) der mit zumindest einem weiteren Karosserieteil bestückbar ist,
- einen den Spannrahmen (8) tragenden Transportwagen (10) mit zumindest zwei voneinander beabstandeten Fahrwerken (12), wobei zumindest eines der Fahrwerke (12) eine Antriebseinrichtung aufweist, und
- eine Schienenführung (S) für die Fahrwerke (12), über die der Spannrahmen (8) mittels dem Transportwagen (10) der Bearbeitungsstation (2) zuführbar und von dieser wegbewegbar ist,
**dadurch gekennzeichnet, dass**
- die Schienenführung (S) zumindest zwei winklig, zueinander angeordnete Schienenteile (S1, S2) umfasst,
- jedes Fahrwerk (12) drehbeweglich am Transportwagen(10) gelagert ist, und
- die beiden Schienenteile (S1, S2) über Mittel (14) zur Ausrichtung eines Fahrwerks (12) miteinander verbunden sind, wobei das Fahrwerk (12), welches in den Mitteln (14) aufgenommen ist, durch diese ausgehend von einer Bewegungsausrichtung in Verlaufsrichtung des einen Schienenteils (S1) in eine Bewegungsrichtung in Verlaufsrichtung des anderen Schienenteils (S2) verdrehbar ist.

2. Anlage nach Anspruch 1, **dadurch gekennzeichnet, dass**
- der eine Schienenteil (S1) geradlinig ausgebildet und parallel zur Förderlinie (X) angeordnet ist, während der zumindest eine weitere Schienenteil (S2) derart ausgebildet und angeordnet ist, dass der Transportwagen (10) ausgehend von einer Position parallel zur Förderlinie (X) in eine hierzu um neunzig Winkelgrade versetzte Position überführbar ist.

3. Anlage nach Anspruch 1 oder 2, **dadurch gekennzeichnet, dass**
- der zumindest eine weitere Schienenteil (S2) geradlinig ausgebildet ist.

4. Anlage nach einem der vorstehenden Ansprüche 1-3, **dadurch gekennzeichnet, dass**
- die Schienenführung (S) zumindest drei in U-Form angeordnete Schienenteile (S1, S2, S3) umfasst, wobei sich der mittige Basis-Schienenteil (S1) der U-Form im Wesentlichen parallel zur Förderlinie (X) erstreckt.

5. Anlage nach einem der vorstehenden Ansprüche, **dadurch gekennzeichnet, dass** an ein Mittel (14) zur Fahrwerksausrichtung zumindest drei Schienenteile (S1, S2, S2') angeschlossen sind.

6. Anlage nach Anspruch 1 oder 2, **dadurch gekennzeichnet, dass**
- der zumindest eine weitere Schienenteil (S2) bogenförmig ausgebildet ist.

7. Anlage nach einem der vorstehenden Ansprüche, **dadurch gekennzeichnet, dass**
- der Transportwagen (10) als in seiner Länge variierbarer Transportwagen ausgebildet ist.

8. Anlage nach einem der vorstehenden Ansprüche, **dadurch gekennzeichnet, dass**
- jedes der Fahrwerke (12) einen separaten Antrieb aufweist.

## Claims

1. Installation for assembling a vehicle body, comprising
- a processing station (2) for mounting and/or processing body parts, which is able to supply a central body part (6), which is to be processed/mounted, via a body conveying device (4) along a conveying line (X),
- a clamping frame (8) which can be fitted with at least one further body part,
- a transport carriage (10) carrying the clamping frame (8) and having at least two mutually spaced-apart running gears (12), wherein at least one of the running gears (12) has a drive device, and
- a rail guide (S) for the running gears (12), by which the clamping frame (8) can be supplied to the processing station (2) and be moved away therefrom by means of the transport carriage (10),
**characterised in that**
- the rail guide (S) comprises at least two rail parts (S 1, S2) disposed at an angle with respect to each other,
- each running gear (12) is mounted in a rotationally moveable manner on the transport carriage (10), and
- the two rail parts (S1, S2) are connected to each other by means (14) for orientating a running gear (12), wherein the running gear (12), which is received in the means (14), is thereby able to rotate starting from a movement orientation in the direction of extension of one rail part (S1) into a movement direction in the direction of extension of the other rail part (S2).

2. Installation as claimed in claim 1, **characterised in that**
- one rail part (S1) is straight and is disposed in parallel with the conveying line (X), while the at least one further rail part (S2) is formed and disposed in such a way that the transport carriage (10) can be moved starting from a position in parallel with the conveying line (X) into a position offset at ninety degrees thereto.

3. Installation as claimed in claim 1 or 2, **characterised in that**
- the at least one further rail part (S2) is straight.

4. Installation as claimed in any one of the preceding claims 1-3, **characterised in that**
- the rail guide (S) comprises at least three rail parts (S1, S2, S3) disposed in a U shape, wherein the middle base rail part (S1) of the U shape extends essentially in parallel with the conveying line (X).

5. Installation as claimed in any one of the preceding claims, **characterised in that** at least three rail parts (S1, S2, S2') are attached to a means (14) for running gear orientation.

6. Installation as claimed in claim 1 or 2, **characterised in that**
- the at least one further rail part (S2) is arcuate in shape.

7. Installation as claimed in any one of the preceding claims, **characterised in that**
- the transport carriage (10) is formed a transport carriage which can be varied in length.

8. Installation as claimed in any one of the preceding claims, **characterised in that**
- each of the running gears (12) has a separate drive.

## Revendications

1. Installation servant au montage d'une carrosserie de véhicule, comprenant :
- un poste d'usinage (2) servant au montage et/ou à l'usinage de pièces de carrosserie, poste d'usinage auquel est fournie par un dispositif de transport de carrosserie (4), le long d'une ligne de transport (X), une pièce de carrosserie (6) centrale à usiner / à monter,
- un cadre de serrage (8) qui peut être doté d'au moins une autre pièce de carrosserie,
- un chariot de transport (10) portant le cadre de serrage (8), chariot de transport comprenant au moins deux trains roulants (12) espacés l'un de l' autre, où au moins l'un des trains roulants (12) présente un dispositif de propulsion, et
- un guidage par rail (S) pour les trains roulants (12), guidage par rail par lequel le cadre de serrage (8) peut être fourni au poste d'usinage (2) au moyen du chariot de transport (10) et peut être évacué de ce poste d'usinage, **caractérisée en ce que**
- le guidage par rail (S) comprend au moins deux parties de rail (S1, S2) disposées de façon angulaire l'une par rapport à l'autre,
- chaque train roulant (12) est logé sur le chariot de transport de façon à pouvoir tourner, et
- les deux parties de rail (S1, S2) sont jointes l'une à l'autre par des moyens (14) servant à l'alignement d'un train roulant (12), où le train roulant (12), qui est logé dans les moyens (14), peut être déplacé par ces moyens le faisant tourner, passant d'une direction de mouvement suivant la direction de profil de l'une des parties de rail (S1), à une direction de mouvement suivant la direction de profil de l'autre partie de rail (S2).

2. Installation selon la revendication 1, **caractérisée en ce que**
- l'une des parties de rail (S1) est configurée de façon rectiligne et parallèle à la ligne de transport (X), tandis que l'autre partie de rail (S2) au moins au nombre de un est configurée et disposée de manière telle, que le chariot de transport (10) puisse être déplacé, passant d'une position parallèle à la ligne de transport (X), à une position décalée de quatre-vingt-dix degrés par rapport à ladite ligne de transport.

3. Installation selon la revendication 1 ou 2, **caractérisée en ce que**
- l'autre partie de rail (S2) au moins au nombre de un est configurée de façon rectiligne.

4. Installation selon l'une quelconque des revendications 1 à 3, **caractérisée en ce que**
- le guidage par rail (S) comprend au moins trois parties de rail (S1, S2, S3) disposées en forme de U, où la partie de rail de base centrale (S1) de la forme en U s'étend pratiquement de façon parallèle à la ligne de transport (X).

5. Installation selon l'une quelconque des revendications précédentes, **caractérisée en ce qu'**au moins trois parties de rail (S1, S2, S2') sont couplées à un moyen (14) servant à l'alignement du train roulant.

6. Installation selon la revendication 1 ou 2, **caractérisée en ce que**
- l'autre partie de rail (S2) au moins au nombre de un est configurée de façon arquée.

7. Installation selon l'une quelconque des revendications précédentes, **caractérisée en ce que**
- le chariot de transport (10) est configuré comme un chariot de transport modulable dans sa longueur.

8. Installation selon l'une quelconque des revendications précédentes, **caractérisée en ce que**
- chacun des trains roulants (12) présente un mode de propulsion séparé.
